# EUROPÄISCHE PATENTSCHRIFT

(11) **EP 3 821 142 B1**
(45) Veröffentlichungstag und Bekanntmachung des Hinweises auf die Patenterteilung: **05.01.2022**
(21) Anmeldenummer: 19794134.7
(22) Anmeldetag: 23.10.2019
(51) Int. Cl.: F16B 12/24, F16B 12/46

(54) **VERBINDUNGSBOLZEN ZUR WERKZEUGLOSEN STOSSVERBINDUNG ZWEIER MÖBELPLATTEN**
CONNECTION BOLT FOR TOOL-FREE BUTT-JOINING OF TWO FURNITURE PANELS
BOULONS DE LIAISON POUR RELIER BOUT À BOUT SANS OUTIL DEUX PANNEAUX DE MEUBLES

(30) Priorität: 05.11.2018 DE 202018106278 U
(43) Veröffentlichungstag der Anmeldung: 19.05.2021
(73) Patentinhaber: Häfele Berlin GmbH & Co KG, 12307 Berlin (DE)
(72) Erfinder: LEISTERT, Peer, 15566 Schöneiche (DE); ARNOLD, Lorenz, 6314 Unterägeri (CH)
(74) Vertreter: Kohler Schmid Möbus Patentanwälte
(86) Internationale Anmeldenummer: PCT/EP2019/078800
(87) Internationale Veröffentlichungsnummer: WO 2020/094394

(56) Entgegenhaltungen:
- DE-A1- 2 546 364
- DE-A1- 2 557 966
- DE-A1- 4 017 515
- DE-A1-102014 009 257
- DE-U1- 20 300 574

## Beschreibung

Die Erfindung betrifft einen Verbindungsbolzen ("Verbindungsbeschlag") zur Verbindung zweier Teile, insbesondere zweier Möbelplatten, gemäß dem Oberbegriff von Anspruch 1. Der Verbindungsbolzen eignet sich insbesondere für Teile aus Span-, MDF- oder holzähnlichen Materialien.

Ein derartiger Verbindungsbolzen ist beispielsweise durch die Fig. 8 des DE 203 07 834 U1 bekannt geworden.

DE 10 2014 009257 A1 offenbart ein Exzenterelement mit einem Gewindeabschnitt und einem gegenüber der Gewindeachse exzentrisch am Gewindeabschnitt angeordneten Zapfen.

DE 25 57 966 A1 offenbart einen Bodenträger mit einem Tragkörper und einem am Tragkörper umfangsseitig vorgesehenen, schräggestellten, zylindrischen Haltezapfen. Der Haltezapfen weist einen konischen Fußabschnitt und einen konischen Kopfabschnitt mit einem radial nach außen vorstehenden, schneidenförmigen Vorsprung auf.

DE 40 17 515 A1 offenbart eine Stockschraube mit einem Gewindeabschnitt und mit einem gegenüber dem Gewindeabschnitt parallelversetzten Zapfen.

DE 295 07 834 U1 offenbart schließlich einen Verbindungsbolzen zur Verbindung zweier Teile mit einem zylindrischen Bolzenschaft zur Verankerung in einer Bohrung des einen Teils und mit einem Bolzenkopf zur Verankerung in einer Bohrung des anderen Teils. Der Bolzenkopf weist einen sich an den Bolzenschaft anschließenden Fußabschnitt und einen hakenförmigen Kopfabschnitt mit einem radial nach außen vorstehenden, schneidenförmigen Vorsprung auf, wobei eine dem Vorsprung gegenüberliegende Rückseite des Kopfabschnitts eine bezüglich dem Bolzenschaft schräg verlaufende Schrägfläche aufweist oder als Halbkonus ausgebildet ist.

Problematisch bei solchen Stoßverbindungen ist allerdings, dass es zu einer Fugenbildung zwischen den zu verbindenden Teilen kommen kann, sowie ein Spalt zwischen dem auf Stoß verbundenen Teil und der Bohrungswandung ("unsaubere Lochabdeckung") verbleiben kann. Ursächlich hierbei ist, dass sich die Drehachse der Einschwenkbewegung unmittelbar am Bohrungsrand befinden muss und dies bei bekannten Anwendungen über eine ausgeklinkte Abschrägung der Stoßfläche des ersten Teils in diesem Bereich realisiert wird, damit dieses sich schräg ansetzen lässt. Das Kaschieren der Fuge sowie die Abdeckung der sichtbaren Bohrung erfolgen dann nachträglich durch Anziehen eines Gewindes (DE 295 07 834 U1), Überschieben einer Hülse (DE 203 00 574 U1) oder ähnliche Hilfsmittel.

Der vorliegenden Erfindung liegt die Aufgabe zugrunde, einen Verbindungsbolzen der eingangs genannten Art dahingehend weiterzubilden, dass eine fugen- und spaltfreie Verbindung zwischen zwei zu verbindenden Teilen erreicht werden kann. Auch soll die Verbindung hinsichtlich Stabilität, Formstabilität, ästhetische Wertigkeit des Erscheinungsbildes, etc. verbessert werden.

Diese Aufgabe wird erfindungsgemäß durch einen Verbindungsbolzen mit den Merkmalen von Anspruch 1 gelöst.

Erfindungsgemäß bewirkt der Achsversatz des Bolzenkopfes gegenüber dem Bolzenschaft eine funktionsbestimmende Verlagerung der Drehachse bei der Einschwenkbewegung des ersten Teils, wodurch sich die Drehachse, die durch die Auflagekante des schräg angesetzten ersten Teils definiert ist, unmittelbar am Bohrungsrand des zweiten Teils befindet.

In einer vorteilhaften Ausführungsform der Erfindung weist der Fußabschnitt, gesehen in der radialen Richtung, in welcher der Vorsprung nach außen vorsteht, eine Breite auf, die größer als der Schaftdurchmesser ist. Die dadurch am Übergang zum Bolzenschaft vorhandene Stirnfläche des Fußabschnitts stellt einen Tiefenanschlag für das erste Teil dar. Im Falle eines kreiszylindrischen Fußabschnitts ist der Durchmesser des Fußabschnitts größer als der Schaftdurchmesser.

Bevorzugt sind der Vorsprung und die dem Vorsprung zugewandte Vorderseite des Kopfabschnitts durch einen Steg oder eine Rampe miteinander verbunden, um den Vorsprung zusätzlich abzustützen und gegen plastische Verformung zu sichern. Dabei kann der Steg besonders vorteilhaft eine konkave Außenkontur aufweisen, die bei der Einschwenkbewegung zu einer Materialverdichtung im zweiten Teil führt und den Bolzenkopf weiter die Bohrung des zweiten Teils hineinzieht.

Für eine sichere Verankerung in der Bohrung des ersten Teils kann der Bolzenschaft mantelseitig eine widerhakenartige Klemmstruktur, insbesondere in Form von Klemmnasen oder -rillen, aufweisen. Die wie Widerhaken gerillten Klemmrillen verhindern das Herausziehen des Bolzenschafts aus der Bohrung des ersten Teils und sind so angebracht, dass sie längs der Teile greifen (keine Spaltgefahr).

Die Erfindung betrifft auch eine Anordnung mit zwei Teilen, die mittels des erfindungsgemäßen Verbindungsbolzens werkzeuglos miteinander verbunden sind, wobei der Bolzenschaft des Verbindungsbolzens in einer Bohrung des einen, ersten Teils verankert ist und der Bolzenkopf in eine Bohrung des anderen, zweiten Teils eingeschwenkt ist und mit seinem Vorsprung in die Bohrungswandung des zweiten Teils eingreift. Das zweite Teil ist aus solch einem Material gebildet, dass der Vorsprung in das Material eindringen kann, vorzugsweise aus Holzwerkstoff oder holzähnlichem Material (Span-, MDF-Materialien). Bei den beiden Teilen kann es sich beispielsweise um zwei Platten, insbesondere Möbelplatten oder Plattenmaterial von Möbelbestandteilen, handeln, die rechtwinklig aneinander befestigt sind.

Der Bolzenschaft hat durch Einschlagen oder Eindrehen in die stirnseitige Bohrung der ersten Platte einen festen Sitz in der ersten Platte. Durch schräges Einstellen des Bolzenkopfes in die Bohrung der zweiten Platte und anschließendes Einschwenken des Bolzenkopfes gräbt sich der Vorsprung des Bolzenkopfes in die Bohrungswandung ein, wodurch der Bolzenkopf auch in der Bohrung der zweiten Platte verankert ist. Die Drehachse beim Einschwenken wird durch die Kante der ersten Platte, mit der die schräg angesetzte erste Platte an der zweiten Platte anliegt, definiert. Der Achsversatz ist dabei möglichst so gewählt, dass die radial vorgesetzte Kante des Bolzenkopfes gegenüber der Auflagekante der schräg angesetzten ersten Platte nach innen versetzt ist und diese Auflagekante somit in der Endposition den Bohrungsrand überdeckt.

Weitere Vorteile der Erfindung ergeben sich aus der Beschreibung, den Ansprüchen und der Zeichnung. Ebenso können die vorstehenden genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Es zeigen:

- Fign. 1a, 1b: zwei unterschiedliche perspektivische Ansichten des erfindungsgemäßen Verbindungsbolzens;
- Fign. 2a, 2b: zwei unterschiedliche Seitenansichten des erfindungsgemäßen Verbindungsbolzens; und
- Fign. 3a, 3b: zwei mittels des erfindungsgemäßen Verbindungsbeschlags miteinander verbundende Möbelplatten im noch nicht verbundenen Zustand (Fig. 3a) und im verbundenen Zustand (Fig. 3b).

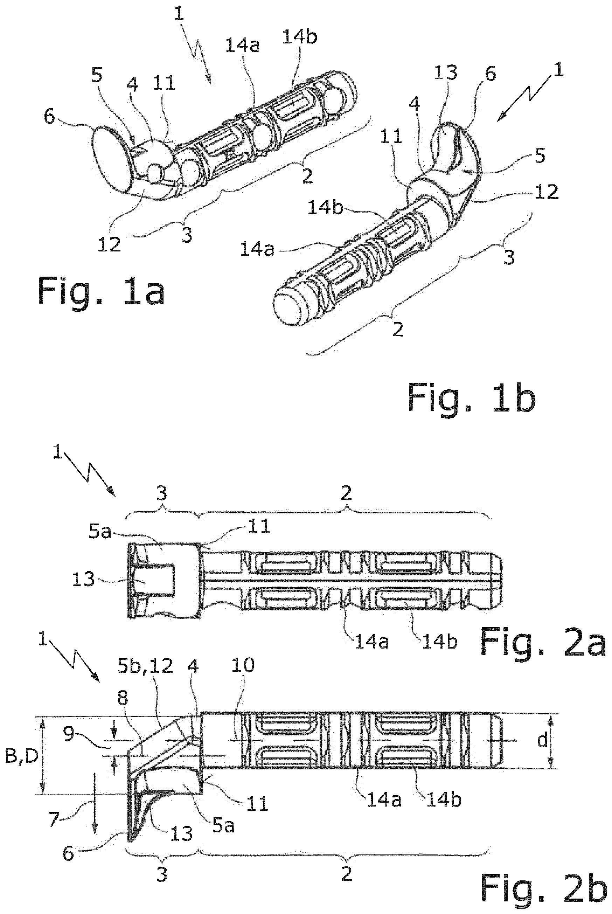

Der in **Fign. 1, 2** gezeigte Verbindungsbolzen ("Verbinder") **1** dient zum Verbinden zweier Möbelplatten und ist einstückig aus Metall oder Kunststoff gefertigt.

Der Verbindungsbeschlag 1 umfasst einen kreiszylindrischen Bolzenschaft **2** und einen Bolzenkopf **3.** Der Bolzenkopf 3 weist einen sich an den Bolzenschaft 2 anschließenden Fußabschnitt **4** und einen hakenförmigen Kopfabschnitt **5** mit einem radial nach außen vorstehenden, schneidenförmigen Vorsprung **6** auf.

Der Fußabschnitt 4 ist in der radialen Richtung **7,** in welcher der Vorsprung 6 radial nach außen vorsteht, gegenüber dem Bolzenschaft 2 exzentrisch versetzt angeordnet, d.h., die Achse **8** des Fußabschnitts 4 weist in dieser Richtung 7 einen Achsversatz **9** gegenüber der Schaftachse **10** auf. Gesehen in der radialen Richtung 7 ist die Breite **B** des Fußabschnitts 4 bzw. im Falle eines kreiszylindrischen Fußabschnitts 4 dessen Durchmesser **D** größer als der Schaftdurchmesser **d,** wodurch der Fußabschnitt 4 an seinem Übergang zum Bolzenschaft 2 eine sichelförmige Stirnfläche **11** aufweist.

Die dem Vorsprung 6 gegenüberliegende Rückseite **5b** des Kopfabschnitts 5 ist als eine bezüglich der Schaftachse 10 schräg verlaufende Schrägfläche 12 ausgebildet. Alternativ kann diese Rückseite 5b auch als ein sich in Richtung auf das freie Kopfende verjüngender Halbkonus ausgeführt sein. Der Vorsprung 6 und die dem Vorsprung 6 zugewandte Vorderseite **5a** des Kopfabschnitts 5 sind zusätzlich miteinander durch einen Steg (Rampe) 13 mit konkaver Außenkontur verbunden, wodurch der Vorsprung 6 zusätzlich abgestützt und gegen plastische Verformung geschützt ist.

Der Bolzenschaft 2 weist mantelseitig eine in Richtung auf den Bolzenkopf 3 wirksame, widerhakenartige Klemmstruktur in Form von abwechselnd mehreren, sich axial und in Umfangsrichtung erstreckende Klemmnasen oder -aussparungen **14a, 14b** auf, wobei zumindest die sich in Umfangsrichtung erstreckenden Klemmnasen 14a über die Mantelfläche des Bolzenschafts 2 vorstehen.

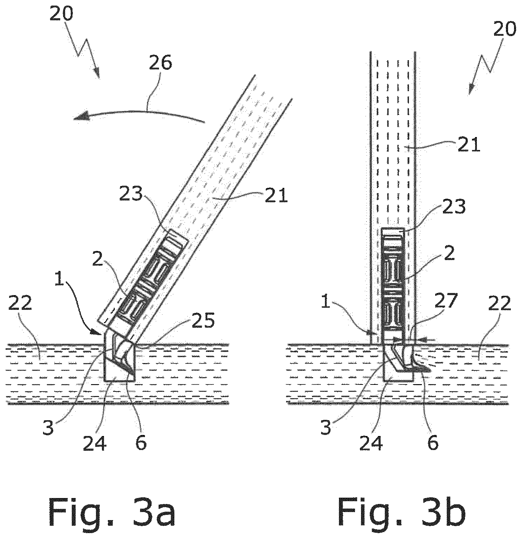

**Fign. 3a, 3b** zeigen eine Möbelanordnung **20** mit zwei Platten **21, 22** und dem Verbindungsbolzen 1. Der Bolzenschaft 2 ist durch Einschlagen, Eindrehen oder Einkleben in einer stirnseitigen Bohrung **23** der ersten Platte 21 verankert, wobei die erste Platte 21 an der Stirnfläche 11 des Fußabschnitts 4 anliegt. Wie in Fig. 3a gezeigt, wird durch schräges Anstellen der ersten Platte 21 der Bolzenkopf 3 in eine Bohrung **24** der Plattenseite der zweiten Platte 22 eingeführt, bis die erste Platte 21 mit ihrer Plattenkante **25** auf der zweiten Platte 22 aufsitzt. Der Durchmesser des zylindrischen Fußabschnitts 4 entspricht idealerweise dem Durchmesser der Bohrung 24.

Durch anschließendes Verkippen der ersten Platte 21 in Richtung **26** schwenkt der Bolzenkopf 3 vollständig in die Bohrung 24 ein, und der Vorsprung 6 des Bolzenkopfes 6 gräbt sich in die Bohrungswandung ein (Fig. 3b), wodurch der Bolzenkopf 3 in der Bohrung 24 verankert ist. Die erste Platte 21 stellt dabei eine Hebelverlängerung dar, so dass der Vorsprung 6 mit entsprechend hoher Kraft in die Bohrungswandung eingedrückt wird. Die Drehachse beim Einschwenken wird durch die an der zweiten Platte 22 anliegende Plattenkante 25 definiert, die sich aufgrund des Achsversatzes 9 unmittelbar am Bohrungsrand der zweiten Platte 22 befindet. Der Achsversatz 9 entspricht dabei der zwischen der stirnseitigen Bohrung 23 und der Plattenaußenseite verbleibenden Wandstärke **27** der ersten Platte 21, so dass weder eine Fuge zwischen den beiden Platten 21, 22 noch ein Spalt zwischen Bolzenkopf 3 und Bohrungswandung der Bohrung 24 auftreten. Die Plattenkante 25 (=Drehachse) der ersten Platte 21 ist gegenüber dem Rand des Fußabschnitts 4 leicht nach außen versetzt. Dieser Versatz, der etwa 0,5mm beträgt, ermöglicht die anschließende Abdeckung der Bohrung 24, da sich der Fußabschnitt 4 gegen die dicht verpresste Deckschicht in der Bohrung 24 abstützt. Die beiden Platten 21, 22 sind nun rechtwinklig miteinander verbunden. Die Verbindung wird erst stabil, wenn die Rechtwinkligkeit der beiden Platten 21, 22 im Gesamtverbund fixiert ist.

Beim Einschwenken des Bolzenkopfes 3 in die Bohrung 24 verhindert der Steg 13 das Aufbiegen des Vorsprungs 9 und komprimiert aufgrund seiner konkaven Außenkontur das hintergriffene Material, was eine Rückfederung bewirkt und Zug und Druck auf die Verbindung gibt. Beim Weiterarbeiten oder beim Transport gibt es keine Schwächung der Verbindung, weil sie gefedert ist. Die Federung gleicht die Bewegungstoleranzen aus im Gegensatz zu einer Schraube.

## Patentansprüche

1. Verbindungsbolzen (1) zur Verbindung zweier Teile (21, 22), insbesondere Möbelplatten, mit einem zylindrischen Bolzenschaft (2) zur Verankerung in einer Bohrung (23) des einen Teils (21) und mit einem Bolzenkopf (3) zur Verankerung in einer Bohrung (24) des anderen Teils (22), wobei der Bolzenkopf (3) einen sich an den Bolzenschaft (2) anschließenden Fußabschnitt (4) und einen hakenförmigen Kopfabschnitt (5) mit einem radial nach außen vorstehenden, schneidenförmigen Vorsprung (6) aufweist, wobei die dem Vorsprung (6) gegenüberliegende Rückseite (5b) des Kopfabschnitts (5) als eine bezüglich dem Bolzenschaft (2) schräg verlaufende Schrägfläche (12) oder als Halbkonus ausgebildet ist,
**dadurch gekennzeichnet,**
**dass** der Fußabschnitt (4) in derjenigen radialen Richtung (7), in welcher der der Schrägfläche (12) bzw. dem Halbkonus gegenüberliegende Vorsprung (6) radial nach außen vorsteht, gegenüber dem Bolzenschaft (2) exzentrisch versetzt angeordnet ist.

2. Verbindungsbolzen nach Anspruch 1, **dadurch gekennzeichnet, dass**, gesehen in der radialen Richtung (7), in welcher der Vorsprung (6) nach außen vorsteht, der Fußabschnitt (4) eine Breite (B) aufweist, die größer als der Schaftdurchmesser (d) ist.

3. Verbindungsbolzen nach Anspruch 1 oder 2, **dadurch gekennzeichnet, dass** der Fußabschnitt (4) zylindrisch ausgebildet ist.

4. Verbindungsbolzen nach Anspruch 3, **dadurch gekennzeichnet, dass** der Durchmesser (D) des Fußabschnitts (4) größer als der Schaftdurchmesser (d) ist.

5. Verbindungsbolzen nach einem der vorhergehenden Ansprüche, **dadurch gekennzeichnet, dass** der Vorsprung (6) und die dem Vorsprung (6) zugewandte Vorderseite (5a) des Kopfabschnitts (5) durch einen Steg (13) miteinander verbunden sind.

6. Verbindungsbolzen nach Anspruch 5, **dadurch gekennzeichnet, dass** der Steg (13) eine konkave Außenkontur aufweist.

7. Verbindungsbolzen nach einem der vorhergehenden Ansprüche, **dadurch gekennzeichnet, dass** der Bolzenschaft (2) mantelseitig eine Klemmstruktur, insbesondere in Form von Klemmnasen oder -rillen (14a, 14b), aufweist.

8. Anordnung (20) mit zwei Teilen (21, 22), die mittels eines Verbindungsbolzens (1) nach einem der vorhergehenden Ansprüche miteinander verbunden sind, wobei der Bolzenschaft (2) des Verbindungsbolzens (1) in einer Bohrung (23) des einen, ersten Teils (21) verankert ist und der Bolzenkopf (3) in eine Bohrung (24) des anderen Teils (22) eingeschwenkt ist und mit seinem Vorsprung (6) in die Bohrungswandung des anderen, zweiten Teils (22) eingreift.

9. Anordnung nach Anspruch 8, **dadurch gekennzeichnet, dass** der Achsversatz (9) zwischen dem Fußabschnitt (4) und dem Bolzenschaft (2) der zwischen der Bohrung (23) des ersten Teils (21) und der Außenseite des ersten Teils (21) verbleibenden Wandstärke (27) entspricht.

10. Anordnung nach Anspruch 8 oder 9, **dadurch gekennzeichnet, dass** die beiden Teile (21, 22) fugenfrei aneinander anliegen.

11. Anordnung nach einem der Ansprüche 8 bis 10, **dadurch gekennzeichnet, dass** der Fußabschnitt (4) des Bolzenkopfes (3) in der Bohrung (24) des zweiten Teils (22) spaltfrei aufgenommen ist.

## Claims

1. A connection bolt (1) for connecting two parts (21, 22), in particular furniture panels, comprising a cylindrical bolt shaft (2) for anchoring in a bore (23) of the one part (21) and comprising a bolt head (3) for anchoring in a bore (24) of the other part (22), wherein the bolt head (3) has a foot portion (4), which adjoins the bolt shaft (2), and a hook-shaped head portion (5) with a radially outwardly projecting, blade-shaped projection (6), wherein the rear side (5b) of the head portion (5) opposite to the projection (6) is designed as an oblique surface (12) which runs obliquely with respect to the bolt shaft (2) or is formed as a half-cone,
**characterized in that** the foot portion (4) is arranged with respect to the bolt shaft (2) eccentrically offset in the radial direction (7) in which the projection (6) opposite to the oblique surface (12) or opposite the half-cone projects radially outwards.

2. The connection bolt as claimed in claim 1, **characterized in that**, as viewed in the radial direction (7) in which the projection (6) projects outwards, the foot portion (4) has a width (B) which is larger than the shaft diameter (d).

3. The connection bolt as claimed in claim 1 or 2, **characterized in that** the foot portion (4) is of cylindrical design.

4. The connection bolt as claimed in claim 3, **characterized in that** the diameter (D) of the foot portion (4) is larger than the shaft diameter (d).

5. The connection bolt as claimed in one of the preceding claims, **characterized in that** the projection (6) and the front side (5a) of the head portion (5) that faces the projection (6) are connected to one another by a web (13).

6. The connection bolt as claimed in claim 5, **characterized in that** the web (13) has a concave outer contour.

7. The connection bolt as claimed in one of the preceding claims, **characterized in that** the bolt shaft (2) has on its lateral side a clamping structure, in particular in the form of clamping noses or clamping grooves (14a, 14b).

8. An assembly (20) comprising two parts (21, 22) which are connected to one another by means of a connection bolt (1) as claimed in one of the preceding claims, wherein the bolt shaft (2) of the connection bolt (1) is anchored in a bore (23) of the one, first part (21), and the bolt head (3) is pivoted into a bore (24) of the other part (22) and engages by way of its projection (6) into the bore wall of the other, second part (22).

9. The assembly as claimed in claim 8, **characterized in that** the axial offset (9) between the foot portion (4) and the bolt shaft (2) corresponds to the wall thickness (27) remaining between the bore (23) of the first part (21) and the outer side of the first part (21).

10. The assembly as claimed in claim 8 or 9, **characterized in that** the two parts (21, 22) bear against one another in a gap-free manner.

11. The assembly as claimed in one of claims 8 to 10, **characterized in that** the foot portion (4) of the bolt head (3) is received in the bore (24) of the second part (22) in a clearance-free manner.

## Revendications

1. Boulon de liaison (1) conçu pour relier deux pièces (21, 22), des panneaux de meubles en particulier, muni d'une tige cylindrique (2) dévolue à l'ancrage dans un alésage (23) de l'une (21) des pièces, et d'une tête (3) dévolue à l'ancrage dans un alésage (24) de l'autre pièce (22), laquelle tête (3) du boulon comprend une zone d'embase (4) attenante à la tige (2) dudit boulon, et une région frontale (5) en forme de crochet qui comporte une protubérance (6) en forme de tranchant faisant saillie radialement vers l'extérieur, sachant que la face postérieure (5b) de ladite région frontale (5), pointant à l'opposé de ladite protubérance (6), est réalisée en tant que surface inclinée (12) s'étendant à l'oblique par rapport à ladite tige (2) du boulon, ou en tant que demi-cône, **caractérisé par le fait**
**que** la zone d'embase (4) est agencée avec décalage excentré, par rapport à la tige (2) du boulon, dans la direction radiale (7) dans laquelle la protubérance (6), pointant respectivement à l'opposé de la surface inclinée (12) ou du demi-cône, fait saillie radialement vers l'extérieur.

2. Boulon de liaison selon la revendication 1, **caractérisé par le fait que** la zone d'embase (4) présente, observée dans la direction radiale (7) dans laquelle la protubérance (6) fait saillie vers l'extérieur, une largeur (B) supérieure au diamètre (d) de la tige.

3. Boulon de liaison selon la revendication 1 ou 2, **caractérisé par le fait que** la zone d'embase (4) est de réalisation cylindrique.

4. Boulon de liaison selon la revendication 3, **caractérisé par le fait que** le diamètre (D) de la zone d'embase (4) est supérieur au diamètre (d) de la tige.

5. Boulon de liaison selon l'une des revendications précédentes, **caractérisé par le fait que** la protubérance (6), et la face antérieure (5a) de la région frontale (5) qui pointe vers ladite protubérance (6), sont reliées l'une à l'autre par une membrure (13).

6. Boulon de liaison selon la revendication 5, **caractérisé par le fait que** la membrure (13) présente un profil extérieur concave.

7. Boulon de liaison selon l'une des revendications précédentes, **caractérisé par le fait que** la tige (2) dudit boulon est pourvue, côté enveloppe, d'une structure de coincement revêtant notamment la forme de becs de coincement, ou de rainures de coincement (14a, 14b).

8. Agencement (20) constitué de deux pièces (21, 22) reliées l'une à l'autre au moyen d'un boulon de liaison (1) conforme à l'une des revendications précédentes, sachant que la tige (2) du boulon de liaison (1) est ancrée dans un alésage (23) de l'une des pièces, ou première pièce (21), et que la tête (3) dudit boulon est insérée par pivotement dans un alésage (24) de l'autre pièce (22) et pénètre, par sa protubérance (6), dans la paroi dudit alésage de l'autre pièce, ou seconde pièce (22).

9. Agencement selon la revendication 8, **caractérisé par le fait que** le décalage axial (9), entre la zone d'embase (4) et la tige (2) du boulon, correspond à l'épaisseur de paroi (27) subsistant entre l'alésage (23) de la première pièce (21) et la face extérieure de ladite première pièce (21).

10. Agencement selon la revendication 8 ou 9, **caractérisé par le fait que** les deux pièces (21, 22) sont en applique l'une contre l'autre avec absence de joint.

11. Agencement selon l'une des revendications 8 à 10, **caractérisé par le fait que** la zone d'embase (4) de la tête (3) du boulon est logée, avec absence d'interstice, dans l'alésage (24) de la seconde partie (22).
